# EUROPEAN PATENT APPLICATION

(11) **EP 4 651 411 A1**
(43) Date of publication of application: **19.11.2025**
(21) Application number: 24756118.6
(22) Date of filing: 05.02.2024
(51) Int. Cl.: H04L 1/00

(54) **METHOD AND APPARATUS FOR TRANSMITTING ETHERNET PHYSICAL LAYER SIGNAL, COMPUTER SYSTEM, AND NETWORK SYSTEM**

(30) Priority: 15.02.2023 CN 202310164002; 03.03.2023 CN 202310238649
(71) Applicant: Huawei Technologies Co., Ltd., Shenzhen, Guangdong 518129 (CN)
(72) Inventor: REN, Hao, Shenzhen, Guangdong 518129 (CN); HE, Xiang, Shenzhen, Guangdong 518129 (CN)
(74) Representative: Huawei European IPR
(86) International application number: PCT/CN2024/076087
(87) International publication number: WO 2024/169744

(57) **Abstract**

A method and an apparatus for transmission of an Ethernet physical layer signal, a device, and a computer-readable storage medium are disclosed. The method includes: obtaining first status information and/or control information, where the first status information indicates that a received first data stream is degraded, and the control information indicates bypass information; and sending the first status information and/or the control information. According to the method, Ethernet physical layer information can be effectively transferred.

## Description

This application claims priorities to Patent Application No. 202310164002.3, filed with the China National Intellectual Property Administration on February 15, 2023 and entitled "METHOD FOR TRANSMISSION OF ETHERNET PHYSICAL LAYER SIGNAL", and to Patent Application No. 202310238649.6, filed with the China National Intellectual Property Administration on March 3, 2023 and entitled "METHOD AND APPARATUS FOR TRANSMISSION OF ETHERNET PHYSICAL LAYER SIGNAL, COMPUTER SYSTEM, AND NETWORK SYSTEM", both of which are included herein by reference in their entireties.

### TECHNICAL FIELD

This application relates to a method and an apparatus for transmission of an Ethernet physical layer signal, a computer system, and a network system.

### BACKGROUND

Institute of Electrical and Electronics Engineers (Institute of Electrical and Electronics Engineers, IEEE) 802.3-2018 specifies forward error correction degrade (forward error correction degrade, FEC degrade). An FEC degrade mechanism is used to monitor whether a reception bit error ratio (bit error ratio, BER) (or an equivalent reception symbol error ratio (symbol error ratio, SER)) within a period of time exceeds a preset value. However, IEEE 802.3-2018 provides no detection signal transmission method for a specific scenario.

### SUMMARY

This application discloses a method and an apparatus for transmission of an Ethernet physical layer signal, a computer system, a network system, and a computer-readable storage medium, to effectively transfer the physical layer signal.

According to a first aspect of this application, a method for transmission of an Ethernet physical layer signal includes: obtaining first status information, where the first status information indicates that a received first data stream is degraded; and sending the first status information. According to the method, the transmission of the physical layer signal can be effectively implemented.

In a possible implementation, sending the first status information includes: sending the first status information out of band. Sending the first status information in an out-of-band manner may be implemented based on a specific interface, so that transmission efficiency can be effectively improved.

In a possible implementation, sending the first status information out of band includes: sending the first status information through an inter-integrated circuit (inter-integrated circuit, IIC) bus protocol interface, a serial peripheral interface (serial peripheral interface, SPI), a two-wire interface (two-wire interface, TWI) bus, or a management data input/output (management data input/output, MDIO) interface.

In a possible implementation, sending the first status information includes: sending a second data stream, where the second data stream includes an alignment marker (alignment marker, AM), the AM includes a status field (status field), and the status field includes a part of the first status information. The part of the first status information is carried in the status field of the AM in the second data stream, so that the status field can be fully used to transfer the status information.

In a possible implementation, sending the first status information includes: sending a second data stream, where the second data stream includes second padding data, and a part or all of the first status information is carried in first padding data or the second padding data. The part of the first status information is carried in the first padding data of an AM in the second data stream or the second padding data of the second data stream, so that the padding data can be effectively used to carry useful information.

In a possible implementation, the second padding data is in the alignment marker AM of the second data stream.

In a possible implementation, the first status information includes forward error correction (forward error correction, FEC) degrade.

In a possible implementation, the first status information includes bypass information.

In a possible implementation, a receiver of the first status information includes a first FEC decoder and a second FEC decoder, and the bypass information includes: bypassing the second FEC decoder or weakening an error correction capability of the second FEC decoder. The second FEC decoder is bypassed or the error correction capability of the second FEC decoder is weakened, so that power consumption and/or a delay in data transmission can be effectively reduced.

In a possible implementation, weakening the error correction capability of the second FEC decoder includes any one of the following:
enabling a configuration 1 of soft decision decoding (soft decision decoding, SDD) of the second FEC decoder;
enabling a configuration 2 of SDD of the second FEC decoder; or
enabling hard decision decoding (hard decision decoding, HDD) of the second FEC decoder.

An error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder. The error correction capability of the second FEC decoder is gradually reduced, so that the power consumption and/or the delay in the data transmission are/is effectively reduced while a system bit error ratio is ensured.

In a possible implementation, a receiver of the first status information includes a first FEC decoder, a de-interleaver, and a second FEC decoder, and the bypass information includes any one of the following:
(1) enabling a configuration 1 of soft decision decoding SDD of the second FEC decoder and enabling a configuration 1 of the de-interleaver;
(2) enabling a configuration 1 of SDD of the second FEC decoder and enabling a configuration 2 of the de-interleaver;
(3) enabling a configuration 1 of SDD of the second FEC decoder and bypassing the de-interleaver;
(4) enabling a configuration 2 of SDD of the second FEC decoder and bypassing the de-interleaver;
(5) enabling hard decision decoding HDD of the second FEC decoder and bypassing the de-interleaver; or
(6) bypassing the second FEC decoder and the de-interleaver.

A de-interleaving delay of the configuration 1 of the de-interleaver is higher than a de-interleaving delay of the configuration 2 of the de-interleaver, an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder. Based on the foregoing combinations, an error correction capability of the second FEC decoder and/or a de-interleaving capability of the de-interleaver are/is gradually reduced, so that power consumption and/or a delay in data transmission are/is effectively reduced while a system bit error ratio is ensured.

In a possible implementation, the de-interleaver is a convolutional de-interleaver.

In a possible implementation, the bypass information is related to a quantity of error units at the first FEC decoder and/or the second FEC decoder.

In a possible implementation, the error unit includes a codeword, a bit, a symbol, or a bit group including any quantity of bits.

In a possible implementation, that the bypass information is related to the quantity of error units at the first FEC decoder and/or the second FEC decoder includes one or more of (1) to (6):
(1) if a quantity of bit errors in P codewords at the second FEC decoder is less than J, bypassing the interleaver and the second FEC decoder, where P and J are positive integers and P>J>1;
(2) if a quantity of bit errors in P codewords at the second FEC decoder is less than K, bypassing the de-interleaver and enabling the hard decision decoding HDD of the second FEC decoder, where K is a positive integer and K>J;
(3) if a quantity of bit errors in P codewords at the second FEC decoder is less than L, bypassing the de-interleaver and enabling the configuration 2 of the soft decision decoding SDD of the second FEC decoder, where L is a positive integer and L>K;
(4) if a quantity of bit errors in P codewords at the second FEC decoder is less than M, bypassing the de-interleaver and enabling the configuration 1 of the SDD of the second FEC decoder, where M>L;
(5) if a quantity of bit errors in P codewords at the second FEC decoder is less than N, enabling a configuration of the FEC decoder as the configuration 1 of the SDD and enabling the configuration 2 of the de-interleaver, where N>M; or
(6) if none of (1) to (5) is met, enabling the configuration 1 of the second FEC decoder and enabling the configuration 1 of the de-interleaver.

In a possible implementation, the bypass information includes a plurality of bits.

In a possible implementation, the bypass information includes first sub-bypass information in a sending direction and/or second sub-bypass information in a receiving direction.

In a possible implementation, the bypass information includes the plurality of bits, and the plurality of bits indicate the first sub-bypass information and the second sub-bypass information.

In a possible implementation, the FEC degrade includes first sub-FEC degrade in the sending direction and/or second sub-FEC degrade in the receiving direction.

In a possible implementation, the FEC degrade includes a plurality of bits, and a part of the plurality of bits included in the FEC degrade indicate the first sub-FEC degrade and the second sub-FEC degrade.

In a possible implementation, a first part of the first status information is carried in the AM, and a second part of the first status information is carried in the second padding data of the data stream.

According to a second aspect of this application, a method for transmission of an Ethernet physical layer signal includes: obtaining control information, where the control information indicates bypass information; and sending the control information.

In a possible implementation, sending the control information includes: sending the control information out of band.

In a possible implementation, sending the control information out of band includes: sending the control information through an IIC protocol interface, an SPI, a TWI, or an MDIO interface.

In a possible implementation, sending the control information includes: sending a data stream, where the data stream includes the control information.

In a possible implementation, the data stream includes an alignment marker AM and/or first padding data pad, and a part or all of the bypass information is carried in the AM and/or the first pad.

In a possible implementation, the AM includes a status field status field, and the status field carries the part or all of the bypass information.

In a possible implementation, the AM includes a second pad, and the second pad carries the part or all of the bypass information.

In a possible implementation, a receiver of the data stream includes a first FEC decoder and a second FEC decoder, and the bypass information includes: bypassing the second FEC decoder or weakening an error correction capability of the second FEC decoder.

In a possible implementation, weakening the error correction capability of the second FEC decoder includes any one of the following:
(1) enabling a configuration 1 of soft decision decoding SDD of the second FEC decoder;
(2) enabling a configuration 2 of SDD of the second FEC decoder; or
(3) enabling hard decision decoding HDD of the second FEC decoder.

An error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder. The error correction capability of the second FEC decoder is gradually reduced, so that power consumption and/or a delay in data transmission are/is effectively reduced while a system bit error ratio is ensured.

In a possible implementation, a receiver of the data stream includes a first FEC decoder, a de-interleaver, and a second FEC decoder, and the bypass information includes any one of the following:
(1) enabling a configuration 1 of soft decision decoding SDD of the second FEC decoder and enabling a configuration 1 of the de-interleaver;
(2) enabling a configuration 1 of SDD of the second FEC decoder and enabling a configuration 2 of the de-interleaver;
(3) enabling a configuration 1 of SDD of the second FEC decoder and bypassing the de-interleaver;
(4) enabling a configuration 2 of SDD of the second FEC decoder and bypassing the de-interleaver;
(5) enabling hard decision decoding HDD of the second FEC decoder and bypassing the de-interleaver; or
(6) bypassing the second FEC decoder and the de-interleaver.

A de-interleaving delay of the configuration 1 of the de-interleaver is higher than a de-interleaving delay of the configuration 2 of the de-interleaver, an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder. Based on the foregoing combinations, an error correction capability of the second FEC decoder and/or a de-interleaving capability of the de-interleaver are/is gradually reduced, so that power consumption and/or a delay in data transmission are/is effectively reduced while a system bit error ratio is ensured.

In a possible implementation, the de-interleaver is a convolutional de-interleaver.

In a possible implementation, the bypass information is related to a quantity of error units at the first FEC decoder and/or the second FEC decoder.

In a possible implementation, the error unit includes a codeword, a bit, a symbol, or a bit group including any quantity of bits.

In a possible implementation, that the bypass information is related to the quantity of error units at the first FEC decoder and/or the second FEC decoder includes one or more of (1) to (6):
(1) if a quantity of bit errors in P codewords at the second FEC decoder is less than J, bypassing the interleaver and the second FEC decoder, where P and J are positive integers and P>J>1;
(2) if a quantity of bit errors in P codewords at the second FEC decoder is less than K, bypassing the de-interleaver and enabling the hard decision decoding HDD of the second FEC decoder, where K is a positive integer and K>J;
(3) if a quantity of bit errors in P codewords at the second FEC decoder is less than L, bypassing the de-interleaver and enabling the configuration 2 of the soft decision decoding SDD of the second FEC decoder, where L is a positive integer and L>K;
(4) if a quantity of bit errors in P codewords at the second FEC decoder is less than M, bypassing the de-interleaver and enabling the configuration 1 of the SDD of the second FEC decoder, where M>L;
(5) if a quantity of bit errors in P codewords at the second FEC decoder is less than N, enabling a configuration of the FEC decoder as the configuration 1 of the SDD and enabling the configuration 2 of the de-interleaver, where N>M; or
(6) if none of (1) to (5) is met, enabling the configuration 1 of the second FEC decoder and enabling the configuration 1 of the de-interleaver.

In a possible implementation, the bypass information includes a plurality of bits.

In a possible implementation, the bypass information includes first sub-bypass information in a sending direction and/or second sub-bypass information in a receiving direction.

In a possible implementation, the bypass information includes two bits, where (1) one bit indicates the sent first sub-bypass information, and the other bit indicates the second sub-bypass information; or (2) the two bits indicate the first sub-bypass information or the second sub-bypass information.

In a possible implementation, the bypass information includes at least three bits, and the at least three bits indicate the first sub-bypass information and the second sub-bypass information.

According to a third aspect of this application, an apparatus for transmission of an Ethernet physical layer signal includes a processor, where the processor is configured to perform any one of the foregoing methods.

In a possible implementation, the apparatus is located in an Ethernet interface.

According to a fourth aspect of this application, a computer system includes any one of the foregoing apparatuses.

According to a fifth aspect of this application, a network system includes a transmitter device and a receiver device, where the transmitter device includes any one of the foregoing apparatuses, and the receiver device is configured to receive status information and/or control information sent by the transmitter device.

According to a sixth aspect of this application, a computer-readable storage medium includes a computer program or instructions. When the computer program or the instructions are executed by a computer, the computer is enabled to perform any one of the foregoing methods.

In a possible implementation, the computer-readable storage medium is a non-transitory (non-transitory) memory.

According to a seventh aspect of this application, a computer program (product) includes computer program code or instructions. When the computer program code or the instructions are executed by a computer, the computer is enabled to perform any one of the foregoing methods.

### BRIEF DESCRIPTION OF DRAWINGS

FIG. 1A and FIG. 1B are diagrams of FEC degrade transmission according to this application;
FIG. 2A and FIG. 2B are diagrams of solutions of concatenated code channel transmission models according to this application;
FIG. 3A is a diagram of a transmission model according to Embodiment 1 of this application;
FIG. 3B is a diagram of another transmission model according to Embodiment 1 of this application;
FIG. 3C is a diagram of mapping an alignment marker AM to PCS lanes in 200GBASE-R according to an embodiment of this application;
FIG. 3D is a diagram of mapping an alignment marker AM to PCS lanes in 400GBASE-R according to an embodiment of this application;
FIG. 3E to FIG. 3G are diagrams of data streams including an AM and other padding data according to embodiments of this application;
FIG. 4 is a diagram of another transmission model according to Embodiment 1 of this application;
FIG. 5A is a diagram of a transmission model according to Embodiment 2 of this application;
FIG. 5B is a diagram of another transmission model according to Embodiment 2 of this application;
FIG. 6A is a diagram of a structure of an apparatus for transmission of an Ethernet physical layer signal according to an embodiment of this application;
FIG. 6B is a diagram of a structure of another apparatus for transmission of an Ethernet physical layer signal according to an embodiment of this application;
FIG. 7 is a diagram of a structure of a computer system according to an embodiment of this application; and
FIG. 8 is a diagram of a structure of a network system according to an embodiment of this application.

### DESCRIPTION OF EMBODIMENTS

Due to environmental interference, system errors, and the like, bit errors (bit errors, BEs) are inevitable in communication transmission. The bit error is inconsistency between data obtained by an information receiver and data sent by a transmitter. Bit errors in key control signal transmission of a device may cause system breakdown and data loss. In addition, the bit errors greatly affect a communication delay and consumer experience in a video, a game, a call, and the like. Therefore, a quantity of bit errors at the information receiver, namely, a bit error ratio (bit error ratio, BER), is an important indicator for measuring communication system performance.

A smaller BER of the receiver indicates higher transmission reliability. To ensure high reliability of a system, the communication system imposes a requirement on a reception BER. For example, an IEEE 802.3bs 400GE standard requires that a BER when data enters a medium access control (medium access control, MAC) layer of the receiver be lower than 1x10^(-13), namely, 1x10⁻¹³, while a BER when the data enters the receiver just after link transmission is completed is about 2.4x10^(-4), namely, 2.4x10⁻⁴. Therefore, to eliminate most bit errors, FEC is used to correct the bit errors to recover sent data. After the FEC correction, the BER of the data entering the MAC layer of the receiver is greatly reduced.

However, a status of a channel may cause, due to an environment change or a human factor, a high bit error ratio (namely, a reception BER) of a signal arriving at the receiver. Even if the FEC correction is performed, the reception BER may fail to meet a specific communication requirement within a period of time.

Thresholds of reception BERs that need to be monitored in different communication scenarios may be different. To meet different monitoring requirements, an FEC degrade detection mechanism is introduced in Ethernet from 100GE (for details, refer to IEEE 802.3-2018) as an optional function, to monitor whether a reception BER (or an equivalent reception symbol error ratio, SER) within a period of time exceeds a preset value. A parameter of the FEC degrade detection mechanism may be flexibly set by a communication system owner. A value is not defined in the standard, and only a value range of a 32-bit register is limited. In 200GE/400GE, FEC degrade continues to be reserved as an optional function (for details, refer to IEEE 802.3-2018).

A running mechanism of the FEC degrade is as follows: In a data transmission process, in each place in which an FEC decoder exists, statistics on a quantity of bit errors within a fixed data length are collected, to determine whether a bit error ratio is high in a current time period, so as to set values of local degrade (local degrade, LD) and remote degrade (remote degrade, RD), and then cyclical updating and transmission of the LD and the RD are continuously performed between the receiver and the transmitter. For an RS code, statistics on a quantity of error symbols in a specific quantity of RS codewords are collected. For a correctable codeword, a quantity of error symbols may be directly obtained. For an uncorrectable codeword, a quantity of error symbols is set to 16, that is, an error correction capability is t+1, where t is a quantity of correctable symbols.

After being enabled, an FEC degrade function is affected by three parameters: a monitoring time length, an FEC degrade activation threshold, and an FEC degrade cancellation threshold. The monitoring time length corresponds to a quantity A of codewords, that is, each A codewords in received data are considered as one block, and statistics on a quantity Z of errors in each block (that is, in the A codewords) are collected. An FEC degrade activation threshold B means that if the quantity Z of errors is greater than B, the FEC degrade is activated, which indicates that a reception BER of a link is high. An FEC degrade cancellation threshold C means that if the quantity Z of errors is less than C, the FEC degrade is canceled, which indicates that a reception BER of a link is within a normal range. B>C.

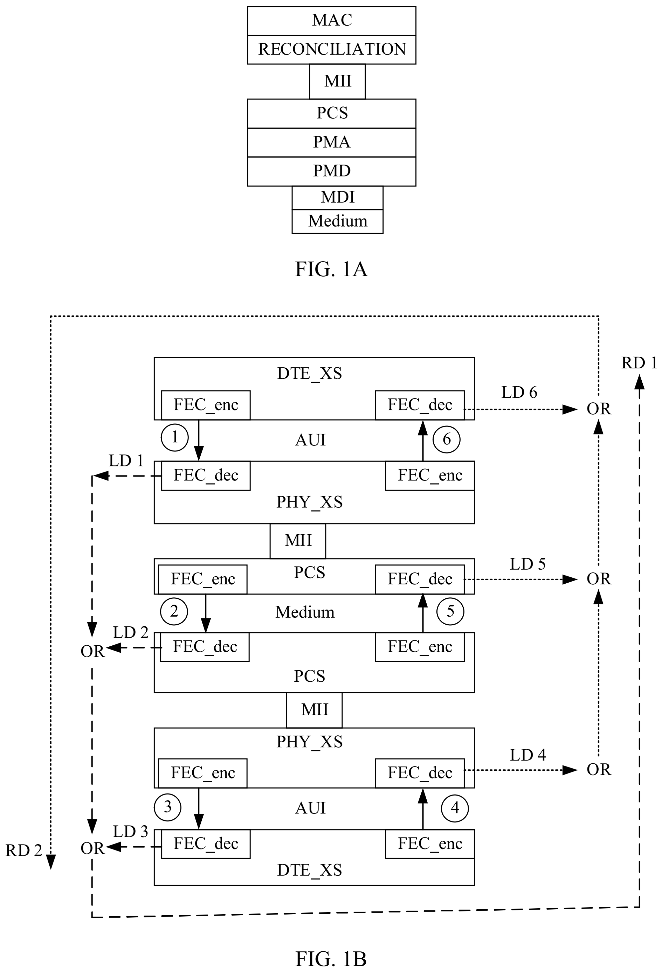

An FEC degrade status signal feeds back a value of a bit error ratio observed at a current FEC decoder. If transmission of the status signal needs to be performed between different decoders, different chips, or different terminals, an FEC degrade status is converted into local degrade (LD) or remote degrade (RD) to perform the transmission, so as to perform overall system control for bit error exceptions. FIG. 1A is a diagram of FEC degrade transmission according to this application. In FIG. 1A, after receiving RD, a PCS sends the RD to a physical media dependent (physical media dependent, PMD) sublayer. FIG. 1B is another diagram of FEC degrade transmission according to this application. In FIG. 1B, to briefly describe solutions, some components are omitted. For example, a PMA sublayer is further included between a DTE_XS and an AUI, and a PMA sublayer is also included between the AUI and a PHY_XS. A PCS sends data to a peer end through a PMA sublayer, a PMD sublayer, and a medium. Similarly, a PMD sublayer of a peer device receives the data from the medium, processes the data, and sends processed data to a PCS of the peer device through a PMA sublayer. After the data is processed by the PCS and a PHY_XS, processed data passes through a PMA sublayer, an AUI, and a PMA sublayer on a DTE_XS side, and arrives at a DTE_XS of the peer device. In a transmission direction, statistics on FEC degrade statuses of all FEC decoders are collected, that is, corresponding LD status parameters are set to 0 or 1 (if FEC degrade is activated due to a high BER, the LD status parameter is set to 1; or if FEC degrade is not activated due to a low BER, the LD status parameter is set to 0), and an OR operation is performed on a plurality of LDs. Finally, a PCS at a current transmission end point receives a result of the OR operation performed on the LDs, and can know whether an exception of high bit errors occurs in the channel direction in which the PCS receives data. The result of the OR operation performed on the LDs is sent from the current PCS to a peer PCS as a remote degrade status signal, to notify the peer PCS whether an exception of high bit errors occurs in the channel direction in which the peer PCS sends the data. Therefore, in FIG. 1B, RD 1=LD 1+LD 2+LD 3, RD 2=LD 4+LD 5+LD 6, and "+" is an OR operator. In the FEC degrade transmission, a 2-bit status signal indicates continuously updated LD and RD, where one bit indicates the LD, and the other bit indicates the RD.

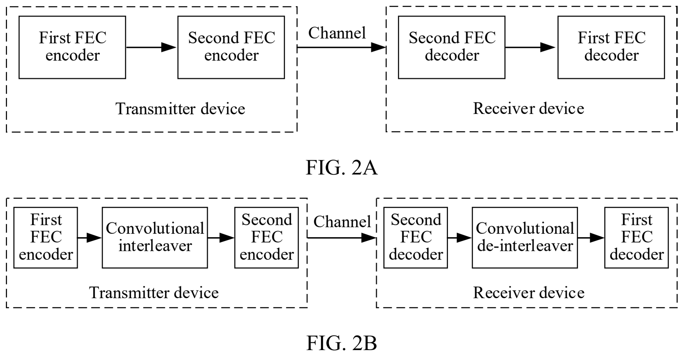

As shown in FIG. 2A, in a concatenated code channel transmission scenario, a transmitter device includes a first FEC encoder and a second FEC encoder, and a receiver device includes a first FEC decoder and a second FEC decoder. A data stream of the transmitter device is encoded by the first FEC encoder and the second FEC encoder, and then is sent to the receiver device through a PMA/PMD. The receiver device sequentially decodes a received data stream via the second FEC decoder and the second FEC decoder, to obtain the data stream initially sent by the transmitter device. The first FEC encoder is an outer code of a concatenated code, and may be a Reed-Solomon (Reed-Solomon, RS) encoder, for example, encoder of an RS (544, 514) code. Correspondingly, the first FEC decoder may be an RS decoder, for example, decoder of an RS (544, 514) code. The RS (544, 514) code is used for error correction in 10-bit symbols. The second FEC encoder is an inner code of the concatenated code, where the inner code may be an FEC code that is based on bit error correction, and may be different from the RS (544, 514) code. For example, the second FEC encoder may be a Bose-Chaudhuri-Hocquenghem (Bose-Chaudhuri-Hocquenghem, BCH) code encoder, an extended BCH code encoder, a Hamming code encoder, or an extended Hamming code encoder. Correspondingly, the second FEC decoder may be an FEC decoder that is based on bit error correction and that has a same code pattern as the second FEC encoder.

In some embodiments, the first FEC encoder may alternatively be any one of a BCH code encoder, a fire (fire) code encoder, a turbo (turbo) code encoder, a turbo product code (turbo product code, TPC) encoder, a staircase (staircase) code encoder, and a low-density parity-check (low-density parity-check, LDPC) code encoder. The second FEC encoder may alternatively be any one of a fire code encoder, a turbo code encoder, a TPC encoder, a staircase code encoder, and an LDPC code encoder.

As shown in FIG. 2B, in the concatenated code scenario in FIG. 2A, an interleaver is further added between the first FEC encoder and the second FEC encoder, to further reduce a bit error ratio. In some embodiments, the interleaver may be a convolutional interleaver. Correspondingly, a de-interleaver is included between the second FEC decoder and the first FEC decoder of the receiver device, and the de-interleaver may be a convolutional de-interleaver. Based on FIG. 2B, data obtained by encoding by the first FEC encoder enters the convolutional interleaver. A first convolutional interleaver performs convolutional interleaving on the data from the first FEC encoder. Interleaved data enters the second FEC encoder. After the data is encoded by the second FEC encoder, encoded data is sent to the second FEC decoder of the receiver device through a channel. The second FEC decoder corresponds to the second FEC encoder and is configured to decode the data obtained by encoding by the second FEC encoder. Data obtained by decoding by the second FEC decoder enters the convolutional de-interleaver. The convolutional de-interleaver performs convolutional de-interleaving on the entering data. Data obtained through the convolutional de-interleaving enters the first FEC decoder. The first FEC decoder performs FEC decoding on the entering data.

The second FEC decoder may use soft decision decoding (soft decision decoding, SDD). The second FEC decoder used as an inner code uses the soft decision decoding, causing almost all received codewords to be correctable, so that a quantity of error bits can be directly obtained. As a result, statistics on the quantity of bit errors are slightly different from statistics on a quantity of bit errors in an RS code. For an uncorrectable codeword, a quantity of error bits may be set to a minimum Hamming distance d of the inner code. Error statistics of the SDD used by the second FEC decoder used as the inner code may be slightly different from an actual quantity of bit errors, and statistics data may be used to assist in reducing the difference. If the inner code uses hard decision decoding (hard decision decoding, HDD), the foregoing error quantity statistics collection manner of the SDD may still be used.

Embodiments of this application provide a status information transmission method. In some embodiments, status information may include FEC degrade. The FEC degrade may include one or both of local degrade (local degrade, LD) and remote degrade (remote degrade, RD) of a device.

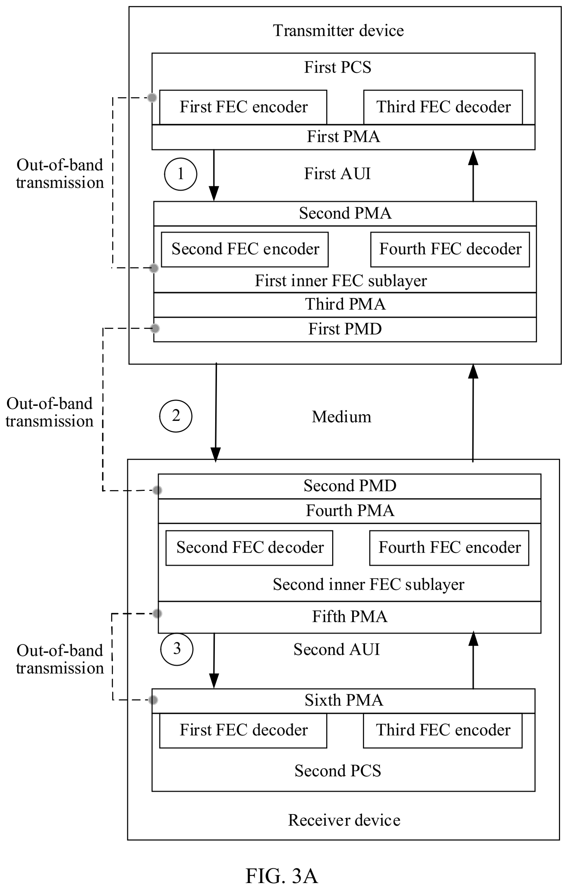

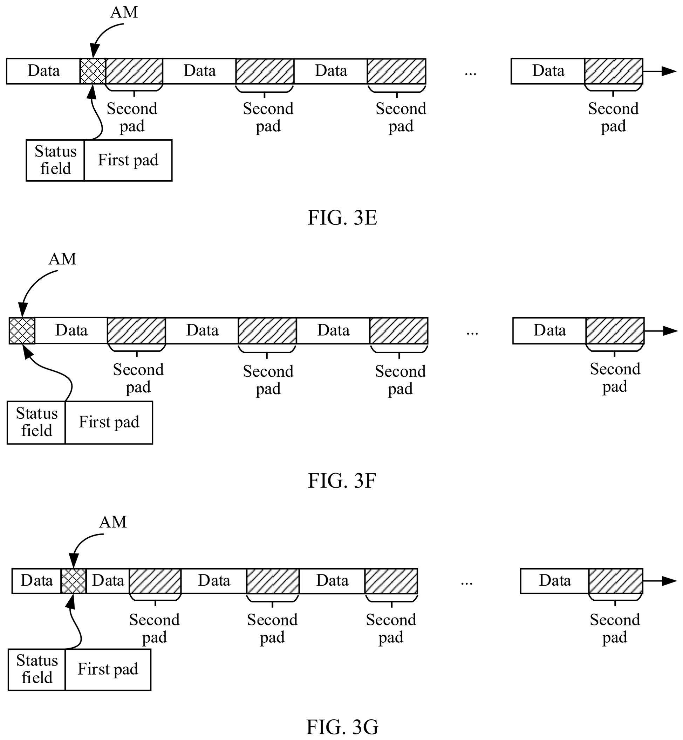

FIG. 3A is a diagram of a status information transmission method according to Embodiment 1 of this application. In this scenario, a transmitter device includes a first physical coding sublayer (physical coding sublayer, PCS), a first physical medium attachment (physical medium attachment, PMA) sublayer, a second PMA sublayer, a first inner FEC sublayer, a third PMA sublayer, and a first physical media dependent (physical media dependent, PMD) sublayer. The first PCS includes a first FEC encoder and a third FEC decoder, and the first inner FEC sublayer includes a second FEC encoder and a fourth FEC decoder. The first PCS communicates with the first PMA sublayer. The first PMA sublayer communicates with the second PMA sublayer through a first attachment unit interface (attachment unit interface, AUI). The second PMA sublayer communicates with a receiver device through the first inner FEC sublayer, the third PMA, the first PMD, and a transmission medium (medium). The receiver device includes a second PCS, a fourth PMA sublayer, a fifth PMA sublayer, a sixth PMA sublayer, and a second PMD sublayer. The second PCS includes a third FEC encoder and a first FEC decoder, and a second inner FEC sublayer includes a fourth FEC encoder and a second FEC decoder. A data stream received by the receiver device from the transmission medium passes through the second PMD sublayer, the fourth PMA sublayer, and the second inner FEC sublayer in sequence, to communicate with the fifth PMA sublayer. The fifth PMA sublayer communicates with the sixth PMA through a second AUI. The sixth PMA communicates with the second PCS.

In some embodiments, the first AUI and/or the second AUI may be a 200GAUI, a 400GAUI, an 800GAUI, or a 1.6TAUI, and the first AUI and/or the second AUI may alternatively be replaced with a CEI (common electrical interface). In some embodiments, the first AUI and/or the second AUI are/is implemented in a physical manner, for example, by using a circuit. In some embodiments, the first PCS includes n PCS lanes, where n is a positive integer, and may be, for example, 4, 8, or 16. The transmission medium may be an optical fiber, a copper cable, a backplane, or any combination thereof. In the transmitter device, the first FEC encoder is an encoder of an outer code of a concatenated code, and the second FEC encoder is an encoder of an inner code of the concatenated code. In the receiver device, the first FEC decoder is a decoder, of the outer code of the concatenated code, corresponding to the first FEC encoder, and the second FEC decoder is a decoder, of the inner code of the concatenated code, corresponding to the second FEC encoder. The first FEC encoder may be an RS (544, 514) code encoder, and the second FEC encoder may be an FEC encoder that is based on bit error correction. Correspondingly, the first FEC decoder is an RS (544, 514) code decoder, and the second FEC encoder may be an FEC decoder that is based on bit error correction.

In a sending direction of the transmitter device, after a data stream of the transmitter device is encoded by the first FEC encoder in the first PCS, an encoded data stream arrives at the second FEC encoder in the first inner FEC sublayer through the first AUI, the first PMA sublayer, and the second PMA sublayer. The second FEC encoder encodes, by using a code pattern of the second FEC encoder, received data obtained by encoding by the first FEC encoder, to generate a concatenated-code encoded bitstream. The bitstream enters the receiver device through the third PMA sublayer, the first PMD sublayer, and the transmission medium. After the bitstream is sequentially processed by the second PMD sublayer and the fourth PMA sublayer of the receiver device, a processed bitstream arrives at the second inner FEC sublayer. The second FEC decoder in the second inner FEC decodes the received bitstream based on the code pattern used by the second FEC encoder and the second FEC decoder. Decoded data enters the first FEC decoder in the second PCS through the second AUI. The first FEC decoder decodes the received data based on a code pattern of the first FEC encoder.

Similarly, in a receiving direction of the transmitter device, after a data stream of the receiver device is encoded by the third FEC encoder in the second PCS, an encoded data stream arrives at the fourth FEC encoder in the second inner FEC sublayer through the sixth PMA sublayer, the second AUI, and the fifth PMA sublayer. The fourth FEC encoder encodes, by using a code pattern of the fourth FEC encoder, received data obtained by encoding by the third FEC encoder, to generate a concatenated-code encoded bitstream. The bitstream enters the transmitter device through the fourth PMA sublayer, the second PMD sublayer, and the transmission medium. After the bitstream is processed by the first PMD sublayer and the third PMA sublayer of the transmitter device, a processed bitstream arrives at the fourth FEC decoder in the first inner FEC sublayer. The fourth FEC decoder decodes the received bitstream based on the code pattern used by the fourth FEC encoder and the fourth FEC decoder. Decoded data arrives at the third FEC decoder in the first PCS through the second PMA sublayer, the first AUI, and the first PMA sublayer. The third FEC decoder decodes the received data based on a code pattern of the third FEC encoder. The first FEC encoder and the third FEC encoder may use a same code pattern, for example, an RS (544, 514) code. The second FEC encoder and the fourth FEC encoder may use a same code pattern, for example, both are FEC decoders that are based on bit error correction.

In data mobility in FIG. 3A, the transmitter device obtains data obtained by decoding by the local third FEC decoder and the local fourth FEC decoder and status information. The status information includes LD and RD of the transmitter device. The LD of the transmitter device is obtained by the first PCS by detecting the transmitter device, and the RD of the transmitter device is received from the receiver. The first PCS transmits the received status information to the first PMA sublayer. Because the first AUI is usually used for short-distance electrical connection, the status information may be transmitted from the first PCS to the first inner FEC sublayer in an out-of-band manner through the first PMA sublayer, the first AUI, and the second PMA sublayer. In some embodiments, the status information may be transmitted through an inter-integrated circuit (inter-integrated circuit, IIC) bus protocol interface, a serial peripheral interface (serial peripheral interface, SPI), a two-wire interface (two-wire interface, TWI), or a management data input/output (management data input/output, MDIO) interface between the first PCS and the first inner FEC sublayer. When the first status information is sent through the MDIO interface, an MDIO register stores the first status information. For example, status information at the second FEC decoder on the left side of FIG. 3A is to be transmitted to the second PCS through an MDIO interface. The second FEC decoder determines, based on a quantity of decoded bit errors, the status information that needs to be transferred, and then writes, through the MDIO interface, the status information into an MDIO register that is on a board and that corresponds to the second FEC decoder. A signal processor (for example, a central processing unit CPU) on the board transmits, through a bus to an MDIO register corresponding to the second PCS, the status information written by the second FEC decoder, and then the second PCS may read, through the register of the second PCS, the status information transmitted by the second FEC decoder. In some embodiments, the status information may include a plurality of bit values. Composition of the data stream in FIG. 3A is shown in FIG. 3E to FIG. 3G. In some embodiments, a bitstream from the first PCS to the first inner FEC sublayer through the first PMA sublayer, the first AUI, and the second PMA sublayer includes a first alignment marker (alignment marker, AM), and the first AM includes a first status field (status field). In some other embodiments, the first AM includes first padding data pad (also referred to as padding). A part or all of the status information may be carried in the first status field, or may be carried in the first pad. Alternatively, a part of bits of the status information may be carried in the first status field, and another part of the status information is carried in the first pad. In some embodiments, a bitstream from the first PCS to the first inner FEC sublayer through the first AUI and the second PMA sublayer includes a second pad, and a part or all of the status information may be carried in the second pad. Alternatively, a first part of the status information is carried in the first status field, and a second part of the status information is carried in the second pad. Alternatively, a first part of the status information is carried in the first status field, a second part of the status information is carried in the second pad, and a third part of the status information is carried in the first pad.

In some embodiments, based on the RS (544, 514), an actual transmission rate marked as 200G/lane is 212.5 Gb/s, and when PAM4 modulation is used, a baud rate is 106.25 GBd. In this case, if encoding with an overhead ratio of n/k=18/17 is used on this basis, a physical link rate may be increased to 225 Gb/s, namely, 112.5 GBd (a baud rate of 112.5G), which is 720 times a fundamental frequency. When an overhead ratio of a second FEC code cannot support an integer multiple of the frequency, additional padding (pad or padding) data, namely, the second pad, usually needs to be added, to increase the rate to a nearest integer multiple of the frequency. For example, if the overhead ratio of the second FEC code is n/k=16/15, the foregoing transmission baud rate of 106.25 GBd is increased to 113.333... GBd, which is no longer an integer multiple of the fundamental frequency. If a second pad accounting for 1/1088 is added, a final rate is adjusted to 726 times the fundamental frequency, that is, 113.4375 GBd. p is a quantity of bits of the second pad, k represents an information bit length of the second FEC code, n represents a second FEC codeword length, k and n are positive integers, and values of k and n are related to a code pattern.

The status information arrives at the first inner FEC sublayer through the first PMA, the first AUI, and the second PMA sublayer. In some embodiments, the first inner FEC sublayer may send the status information to the receiver device along with a data stream, or may transmit the status information to the receiver device in an out-of-band manner (that is, through a protocol interface, for example, an IIC bus protocol interface, an SPI, a TWI, or an MDIO interface) through the transmission medium. In some other embodiments, the second FEC encoder at the first inner FEC sublayer encodes the received bitstream based on the code pattern of the second FEC encoder, and a data stream sent from the first inner FEC sublayer to the receiver device through the transmission medium includes a second AM, where the second AM includes a second status field. In some other embodiments, the second AM includes the second pad. A part or all of the status information may be carried in the second status field, or may be carried in the second pad. In some embodiments, when an overhead of a bitstream sent from the first PMA to the receiver device, namely, a bitstream obtained by encoding by the second FEC encoder, cannot support an integer multiple of the frequency, a third pad is additionally added to increase a data rate of the bitstream to the integer multiple of the frequency. The status information may be carried in the third pad, and arrives at the receiver device through the transmission medium. In some embodiments, alternatively, the first part of the status information may be carried in the second AM, and the second part may be carried in the third pad. In some embodiments, alternatively, the first part of the status information may be carried in the second status field, the second part may be carried in the second pad, and the third part may be carried in the third pad. In some embodiments, the first PCS is located in a main chip of a physical (physical, PHY) layer device of the transmitter device, and that the first PCS sends the status information to the first PMA sublayer is that the main chip sends the status information to the first PMA sublayer. In some embodiments, the first PMA sublayer is located in a first optical/electrical module, and the optical/electrical module sends the status information to the receiver device.

At the receiver device, the second FEC decoder receives the data stream sent by the transmitter device through the transmission medium. The received data stream is processed through the second PMD sublayer and the fourth PMA sublayer, and then a processed data stream arrives at the second FEC decoder at the second inner FEC sublayer. The second FEC decoder performs decoding based on the code pattern of the second FEC decoder, determines the status information of the transmitter device after the decoding, and sends the status information to the second PCS through the fifth PMA sublayer, the second AUI, and the sixth PMA sublayer. Similar to sending the status information from the first PCS to the first inner FEC sublayer through the first PMA, the first AUI, and the second PMA sublayer, the status information may be sent to the second PCS through the fifth PMA sublayer, the second AUI, and the sixth PMA sublayer in an out-of-band manner, by being carried in an AM, by being carried in a pad in a data stream, or the like.

Finally, the second PCS of the receiver device obtains the status information, and determines a degrade status of data sent by the receiver device to the transmitter device and a degrade status of data sent by the transmitter device to the receiver device.

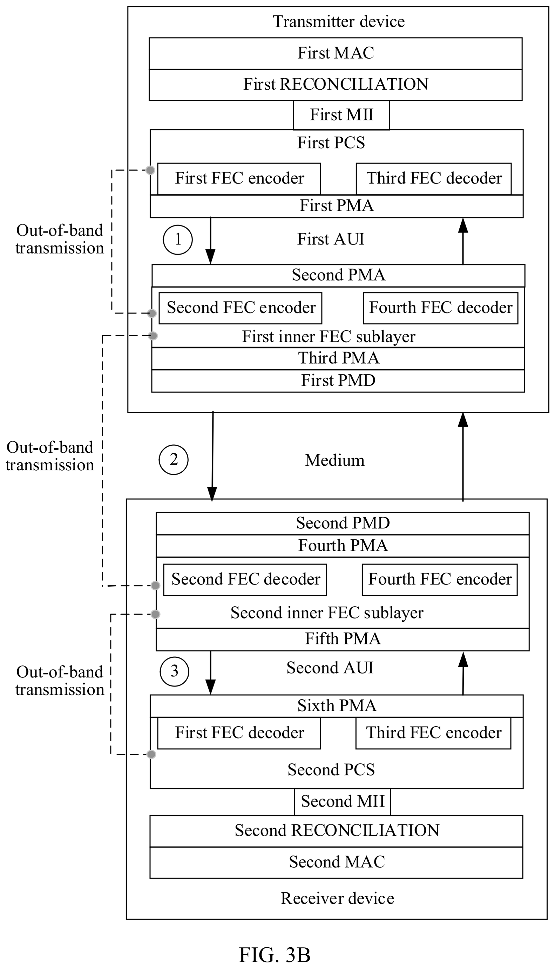

FIG. 3B is a diagram of a structure of an apparatus for implementing the solution in FIG. 3A. As shown in FIG. 3B, based on FIG. 3A, the apparatus further includes a first MAC, a first reconciliation (reconciliation, RS) sublayer, and a first PMD of a transmitter device. Functions of the first MAC and the first RS sublayer are the same as those specified in IEEE 802.3-2018. The first RS sublayer communicates with a first PCS through a first media independent interface (media independent interface, MII), and the first PMD sends data to a transmission medium. The first MII may be a 10 Mb/s or 100 Mb/s MII, a 1000 Mb/s GMII, an RMII (reduced MII), a serial MII (serial MII, SMII), a serial synchronous MII (serial sync MII, SSMII), a source synchronous SMII (source synchronous SMII, S3MII), a gigabit MII (Gigabit MII, GMII), an RGMII (Reduced GMII), a serial GMII (serial GMII, SGMII), a ten bit interface (ten bit interface, TBI), an RTBI (Reduced TBI), a 10 gigabit MII (10 Gigabit MII, XGMII), a 25 gigabit MII (25 Gigabit MII), a 40 gigabit MII, a 50 gigabit MII, a 100 gigabit MII (100 Gb/s MII, CGMII), a 200 gigabit MII (200 Gb/s MII, 200GMII), a 400 gigabit MII (400 Gb/s MII, 400GMII), an 800 gigabit MII, a 1.6 terabit MII, or an Ethernet interface with a higher rate. A receiver device may include a structure similar to that of the transmitter device.

In some embodiments, the apparatus is located in an Ethernet interface, a chip, or a network device.

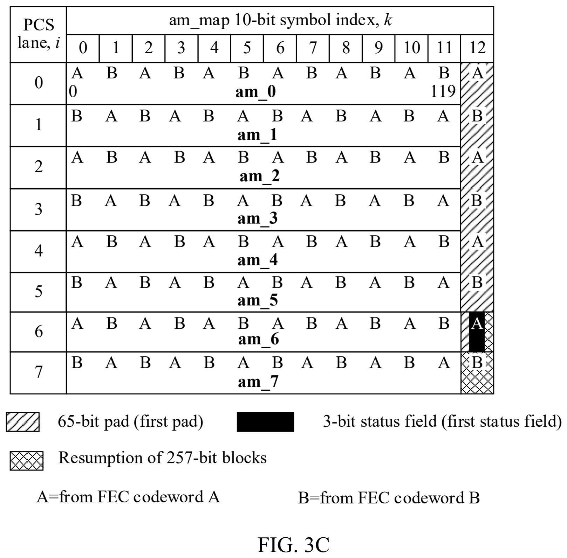

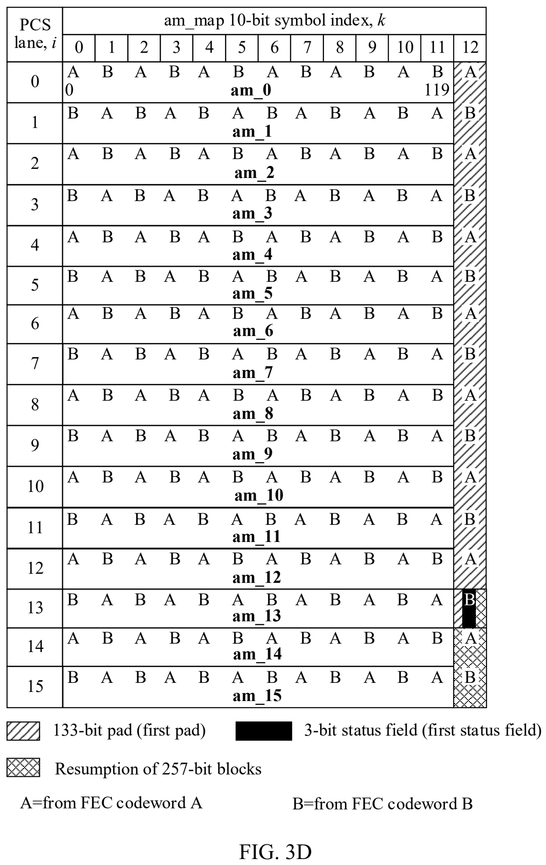

In some embodiments, as shown in FIG. 3C, if the first PCS is a 200GBASE-R PCS, a first AM includes a 65-bit first pad and a 3-bit first status field. It is assumed that there are eight PCS lanes in FIG. 3C. As shown in FIG. 3D, if the first PCS is a 400GBASE-R PCS, and it is assumed that there are 16 PCS lanes in FIG. 3D, a first AM includes AMs of the 16 PCS lanes, a 133-bit first pad, and a 3-bit first status field. If the first PCS is an 800GBASE-R PCS, a 1.6TBASE-R PCS, or a PCS with a higher rate, the first PCS may include n PCS lanes, and a first AM includes an m-bit first pad and a t-bit first status field, where m, n, and t are positive integers, the t-bit first status field may be distributed on one or more of the n PCS lanes, and the m-bit first pad may be distributed on a plurality of lanes in the n PCS lanes or all of the n PCS lanes.

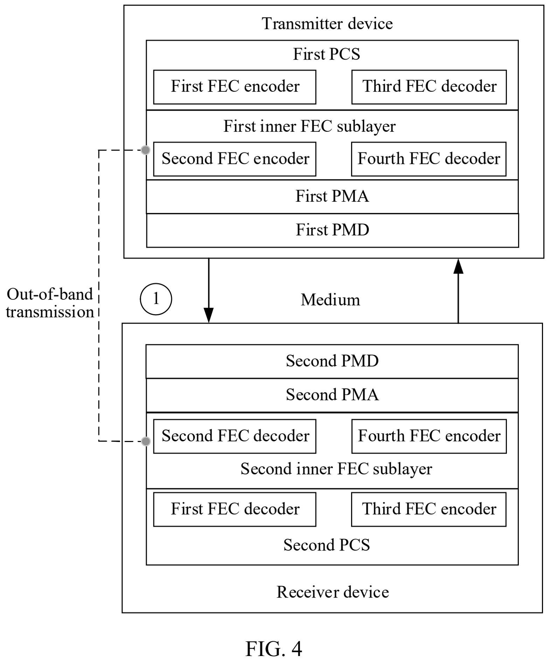

Similar to FIG. 3A and FIG. 3B, as shown in FIG. 4, in another scenario of embodiments of this application, a first PCS in which a first FEC encoder of a transmitter device is located and a first inner FEC sublayer in which a second FEC encoder is located are located in a same chip circuit. Similarly, a second PCS in which a first FEC decoder of a receiver device is located and a second inner FEC sublayer in which a second FEC decoder is located may be located in a same chip circuit. Code patterns of the first FEC encoder and the first FEC decoder are the same, and both are, for example, an RS (544, 514) code. Code patterns of the second FEC encoder and the second FEC decoder are the same, and both are, for example, a same FEC code based on bit error correction. The transmitter device sends status information to the receiver device through a transmission medium. The transmitter device may include the status information in an AM added after encoding by the second FEC encoder, and send the AM to the receiver device. In some embodiments, the status information may be carried in a status field of the AM or a first pad of the AM. In some embodiments, a first part of the status information may be carried in a status field of the AM, and a second part of the status information may be carried in a first pad of the AM. In some embodiments, a data stream sent by the transmitter device to the receiver device through the transmission medium includes a second pad, and the second pad carries a part or all of the status information.

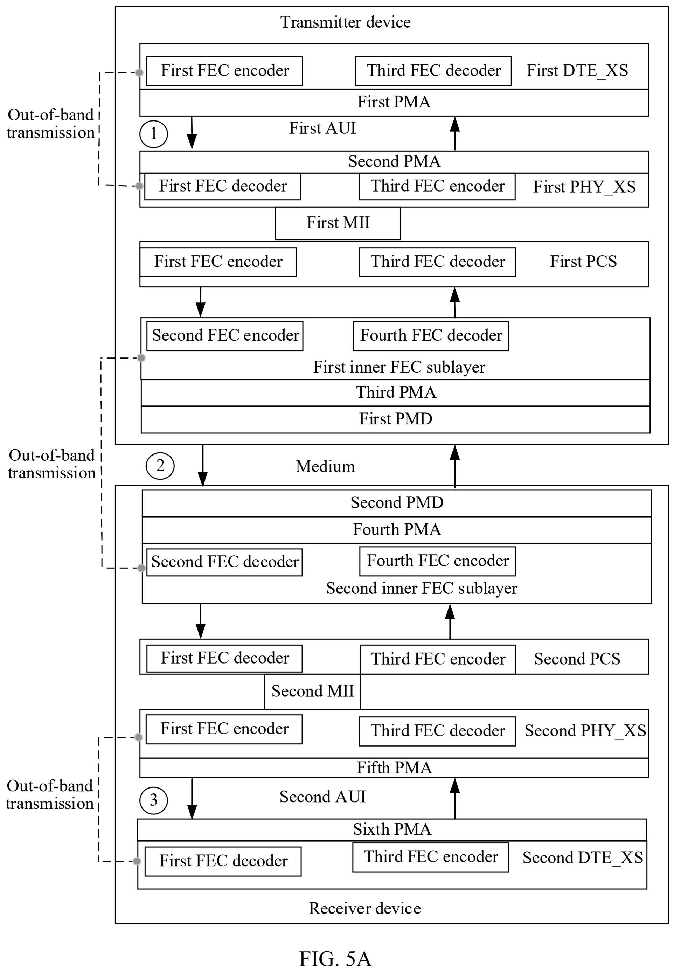

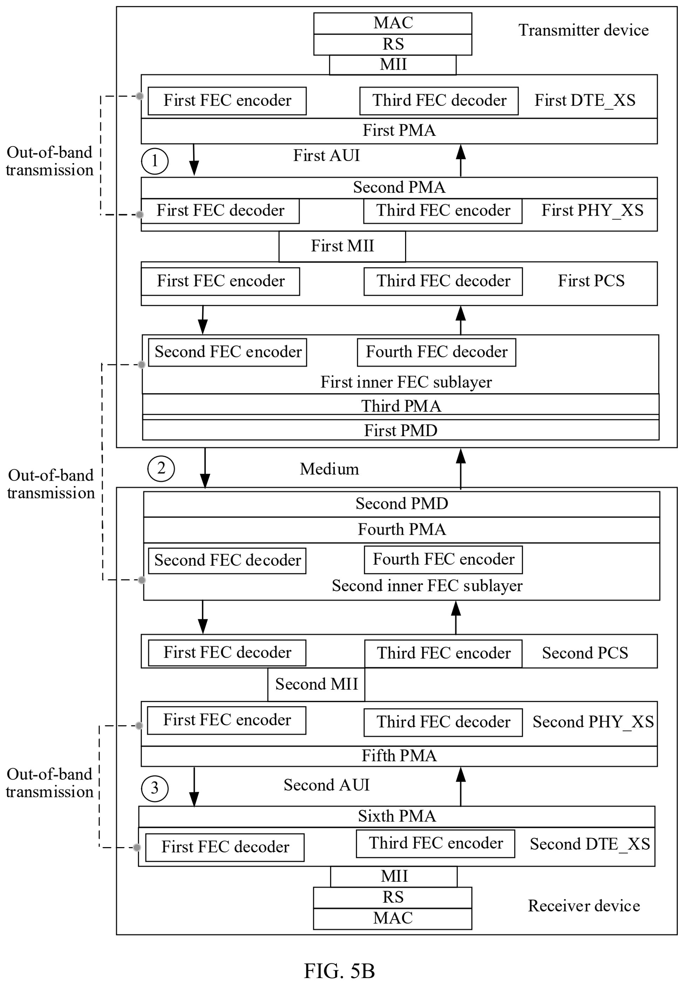

FIG. 5A and FIG. 5B are diagrams of a status information transmission method according to Embodiment 2 of this application. Systems in FIG. 5A and FIG. 5B include a transmitter device and a receiver device. The transmitter device includes a first data terminal equipment extender sublayer (data terminal equipment extender sublayer, DTE_XS), a first PMA sublayer, a second PMA sublayer, a first physical layer device extender sublayer (physical layer device extender sublayer, PHY_XS), a first PCS, a first inner FEC sublayer, a third PMA sublayer, and a first PMD sublayer. The first DTE_XS communicates with the first PHY_XS through the first PMA sublayer, a first AUI, and the second PMA sublayer, and the first PHY_XS communicates with the first PCS through a first MII. After data sent by the first PCS is processed by the first inner FEC sublayer, the third PMA sublayer, and the first PMD sublayer, processed data is sent to the receiver device through a transmission medium. The first DTE_XS includes a first FEC encoder and a third FEC decoder, and the first PHY XS includes a first FEC decoder and a third FEC encoder. The first PCS includes a first FEC encoder and a third FEC decoder. The first inner FEC sublayer includes a second FEC encoder and a fourth FEC decoder.

The receiver device includes a second PMD sublayer, a fourth PMA sublayer, a fifth PMA sublayer, a sixth PMA sublayer, a second inner FEC sublayer, a second PCS, a second PHY_XS, and a second DTE_XS. The second DTE_XS communicates with the second PHY_XS through the sixth PMA sublayer, a second AUI, and the fifth PMA sublayer, and the second PHY_XS communicates with the second PCS through a second MII. The second PCS includes a first FEC decoder and a third FEC encoder. The second PHY_XS includes a first FEC encoder and a third FEC decoder, the second DTE_XS includes a first FEC decoder and a third FEC encoder, and the second inner FEC sublayer includes a second FEC decoder and a fourth FEC decoder.

In some embodiments, the first AUI and/or the second AUI may be a 200GAUI, a 400GAUI, an 800GAUI, a 1.6TAUI, or an interface with a higher rate. The first AUI and/or the second AUI may alternatively be replaced with a CEI (common electrical interface). In some embodiments, the first AUI and/or the second AUI are/is implemented in a physical manner, for example, by using a circuit. The first MII and/or the second MII may be a 200GMII, a 400GMII, an 800GMII, a 1.6TMII, or an interface with a higher rate. The transmission medium may be an optical fiber, a copper cable, a backplane, or any combination thereof.

In the transmitter device, the second FEC encoder is an encoder of an outer code of a concatenated code, and the third FEC encoder is an encoder of an inner code of the concatenated code. In the receiver device, the second FEC decoder is a decoder, of the outer code of the concatenated code, corresponding to the second FEC encoder, and the third FEC decoder is a decoder, of the inner code of the concatenated code, corresponding to the third FEC encoder. The second FEC encoder may be an RS (544, 514) code encoder, and the third FEC encoder may be an FEC encoder that is based on bit error correction. Correspondingly, the second FEC decoder is an RS (544, 514) code decoder, and the third FEC encoder may be an FEC decoder that is based on bit error correction. In some embodiments, the first FEC encoder is an RS (544, 514) code encoder, and the first FEC decoder is an RS (544, 514) code decoder.

In a sending direction of the transmitter device, after a data stream of the transmitter device is encoded by the first FEC encoder in the first DTE_XS, an encoded data stream arrives at the first FEC decoder in the first PHY_XS through the first PMA sublayer, the first AUI, and the second PMA sublayer. The first FEC decoder decodes, by using a code pattern of the first FEC encoder, received data obtained by encoding by the first FEC encoder, and then sends decoded data to the first PCS through the first MII. Similar to Embodiment 1, the first DTE_XS may transmit status information to the first PHY_XS in an out-of-band manner (for example, through an IIC protocol interface, an SPI, a TWI, or an MDIO interface), or may send the status information to the first PCS by using a first AM in the data stream sent by the first DTE_XS to the first PHY_XS. At the first PHY_XS, the first FEC decoder may obtain LD of the transmitter device by decoding, and update, based on the detected LD, an LD value in the status information received from the first DTE_XS.

The status information transmitted by the transmitter device enters the receiver device through the transmission medium. The third FEC decoder and the second FEC decoder of the receiver device separately decode a received bitstream based on code patterns used by the third FEC encoder and the second FEC decoder. Decoded data enters the first FEC encoder in the second PHY_XS through the second MII, and is encoded by the first FEC encoder, and then encoded data is transmitted to the first FEC decoder in the second DTE_XS through the second AUI. The first FEC decoder decodes the received data based on a code pattern of the first FEC encoder. A manner in which the second PHY_XS transmits the status information to the second DTE_XS through the fifth PMA sublayer, the second AUI, and the sixth PMA sublayer is the same as a manner in which the first DTE_XS transmits the status information to the first PHY_XS through the first PMA sublayer, the first AUI, and the second PMA sublayer.

Concatenated code manners in FIG. 2A and FIG. 2B can effectively improve a data stream transmission process with a high bit error ratio. However, in some scenarios, such as data stream transmission between devices in a data center, data stream transmission in high-speed computing, and artificial intelligence (artificial intelligence, AI), a bit error ratio of the data stream transmission is low, or in some scenarios, a bit error ratio fluctuation of data stream transmission is small; and a reliability requirement in the standard can be met without a concatenated code. Therefore, embodiments of this application provide a method for bypassing some components.

In the concatenated code scenario shown in FIG. 2A, the second FEC decoder may perform decoding in a hard decision decoding (hard decision decoding, HDD) manner and a soft decision decoding (soft decision decoding, SDD) manner. In this scenario, bypass manners are shown in Table 1. To obtain an optimal error correction capability of decoding, a configuration 1 of SDD of the second FEC decoder may be enabled. When an error correction capability of the second FEC decoder needs to be weakened, a configuration 2 of the SDD of the second FEC decoder may be enabled. Compared with the configuration 1, the configuration 2 of the soft decoding of the second FEC decoder has a lower delay and/or lower power consumption. This can be achieved by reducing a test pattern (test pattern) and/or changing a decoding algorithm. Error correction performance of the configuration 2 of the soft decoding of the second FEC decoder is weaker, but is still stronger than error correction performance of the hard decoding of the second FEC decoder. Therefore, a data stream transmission delay and power consumption can be reduced by not enabling the second FEC decoder, weakening the error correction capability of the second FEC decoder, or the like. For weakening the error correction capability of the second FEC decoder, an error correction capability in the soft decision decoding SDD manner of the second FEC decoder may be reduced to reduce the data stream transmission delay and the power consumption, or the soft decoding manner of the second FEC decoder may be replaced with the hard decoding manner.

**Table 1: Bypass manners based on the concatenated code scenario in FIG. 2A**

| Bypass manner | Second FEC decoder |
|---|---|
| Manner 1 | Enable a configuration 1 of SDD of the second FEC decoder |
| Manner 2 | Enable a configuration 2 of SDD of the second FEC decoder |
| Manner 3 | Bypass the second FEC decoder |

In the concatenated code scenario shown in FIG. 2B, a data stream transmission delay and power consumption can be reduced in one or more manners of the following: not enabling the second FEC decoder, not enabling the interleaver, weakening an interleaving effect of the interleaver, and weakening an error correction capability of the second FEC decoder. Specific bypass manners are shown in Table 2.

During decoding, the second FEC decoder and the first FEC decoder both collect statistics on a quantity of bit errors, to set control information based on the quantity of bit errors and a determining threshold, where the control information indicates bypass information. In some embodiments, the bypass information includes a bypass_indicator control parameter, and the bypass_indicator control parameter indicates the following bypass manners in receiver and transmitter devices:

**Table 2: Bypass manners based on the concatenated code scenario in FIG. 2B**

| Bypass manner | Second FEC decoder | De-interleaver |
|---|---|---|
| Manner 1 | Enable a configuration 1 of SDD of the second FEC decoder | Enable a configuration 1 of the de-interleaver |
| Manner 2 | Enable a configuration 1 of SDD of the second FEC decoder | Enable a configuration 2 of the de-interleaver |
| Manner 3 | Enable a configuration 1 of SDD of the second FEC decoder | Bypass the de-interleaver |
| Manner 4 | Enable a configuration 2 of SDD of the second FEC decoder | Bypass the de-interleaver |
| Manner 5 | Enable HDD of the second FEC decoder | Bypass the de-interleaver |
| Manner 6 | Bypass the second FEC decoder | Bypass the de-interleaver |

In some embodiments, the interleaver is a convolutional interleaver. When the convolutional interleaver is enabled, convolutional interleaving of different delays may be configured via a register, that is, a delay of interleaving in each row is set.

Table 2 provides examples of two types of convolutional interleaver configurations with different delays: the configuration 1 and the configuration 2, where a convolutional interleaving delay of the configuration 1 is higher than a convolutional interleaving delay of the configuration 2. In some embodiments, there may be more than two types of convolutional interleaver configurations. For example, in addition to the foregoing configurations 1 and 2, configurations 3, 4, ..., n with a lower delay and/or lower power consumption may be further included.

Because power consumption and/or a delay of the convolutional interleaver is higher than power consumption and/or a delay of the soft decoding of the second FEC decoder, reducing the configuration of the convolutional interleaving or disabling the convolutional interleaving is preferentially considered. The configuration 2 of the convolutional interleaving has a lower delay and/or lower power consumption than the configuration 1. This can be achieved by reducing a quantity of registers or modifying a parameter. Correspondingly, an interleaving effect of the configuration 2 is reduced, and error correction performance is weaker.

In some embodiments, the second FEC encoder and the second FEC decoder in FIG. 2A and FIG. 2B are both enabled or disabled. In other words, when the second FEC decoder is disabled or bypassed, the second FEC encoder is also disabled or bypassed; or when the second FEC decoder is enabled, the second FEC encoder is also enabled.

In some embodiments, the interleaver and the de-interleaver in FIG. 2B are both enabled or disabled. In other words, when the de-interleaver is disabled or bypassed, the interleaver is also bypassed; or when the de-interleaver is enabled, the interleaver is also enabled.

If the quantity of bit errors of the first FEC decoder is not considered for determining, and only the quantity of bit errors of the second FEC decoder and the threshold are used for determining, in some embodiments, the quantity of bit errors and the threshold may be processed in a unit of a codeword, bit, symbol, or bit group including any quantity of bits. For example, the codeword is used as a unit. Various bypass manners in FIG. 2A, FIG. 2B, and Table 2 are as follows:
(1) if a quantity of bit errors in P codewords at the second FEC decoder is less than J, bypassing the interleaver and the second FEC decoder, where P and J are positive integers and P>J>1;
(2) if a quantity of bit errors in P codewords at the second FEC decoder is less than K, bypassing the de-interleaver and enabling the hard decision decoding HDD of the second FEC decoder, where K is a positive integer and K>J;
(3) if a quantity of bit errors in P codewords at the second FEC decoder is less than L, bypassing the de-interleaver and enabling the configuration 2 of the soft decision decoding SDD of the second FEC decoder, where L is a positive integer and L>K;
(4) if a quantity of bit errors in P codewords at the second FEC decoder is less than M, bypassing the de-interleaver and enabling the configuration 1 of the SDD of the second FEC decoder, where M>L;
(5) if a quantity of bit errors in P codewords at the second FEC decoder is less than N, enabling a configuration of the FEC decoder as the configuration 1 of the SDD and enabling the configuration 2 of the de-interleaver, where N>M; or
(6) if none of (1) to (5) is met, enabling the configuration 1 of the second FEC decoder and enabling the configuration 1 of the de-interleaver.

In some embodiments, a quantity of occurrences may be set for a trigger condition of each bypass manner, and quantities of occurrences of trigger conditions may be the same or different. A change of the bypass_indicator control parameter is triggered only when a quantity threshold of occurrences of each trigger condition is met.

Multi-condition switching between these bypass manners may be implemented via a state machine. The bypass manner switching may be automatically performed when communication between a receiver and a transmitter is just established, or may be performed in a communication process because a switching condition is met. During the switching, a connection may be reset or synchronization locking may be reperformed, and then communication may be performed in a switched bypass manner. Specifically, there are two switching manners. One is switching from a default high bit error state to a low bit error state, and the other is switching from a default low bit error state to a high bit error state. Switching from the default high bit error state to the low bit error state means that a system default configuration before communication establishment is the high bit error state. If an actual bit error ratio of a channel after the communication establishment meets the high bit error state, switching is not needed. If an actual bit error ratio of a channel is extremely low, a configuration is switched. Switching from the default low bit error state to the high bit error state means that a system default configuration before communication establishment is the low bit error state. If an actual bit error ratio of a channel after the communication establishment meets the low bit error state, switching is not needed. If an actual bit error ratio of a channel is high, a configuration is switched.

In some embodiments, the bypass_indicator control parameter is represented by a plurality of bits, and a transmission manner of the bypass_indicator control parameter is the same as a transmission manner of the status information in Embodiment 1 and Embodiment 2.

In some embodiments, the bypass_indicator control parameter is represented by one bit, and indicates only one of the following:
(1) disabling the second FEC decoder in FIG. 2A;
(2) weakening a decoding capability of the second FEC decoder in FIG. 2A, for example, changing a decoding manner of the second FEC decoder in FIG. 2A from the configuration 1 of the SDD to the configuration 2 of the SDD, or changing a decoding manner of the second FEC decoder in FIG. 2A from the configuration 2 of the SDD to the HDD;
(3) disabling the second FEC decoder in FIG. 2B;
(4) disabling the de-interleaver in FIG. 2B;
(5) disabling the second FEC decoder and the de-interleaver in FIG. 2B;
(6) enabling the configuration 1 of the SDD of the second FEC decoder in FIG. 2B and enabling the configuration 1 of the de-interleaver;
(7) enabling the configuration 1 of the SDD of the second FEC decoder in FIG. 2B and enabling the configuration 2 of the de-interleaver;
(8) enabling the configuration 1 of the SDD of the second FEC decoder in FIG. 2B and disabling the de-interleaver;
(9) enabling the configuration 2 of the SDD of the second FEC decoder in FIG. 2B and disabling the de-interleaver; or
(10) enabling the HDD of the second FEC decoder in FIG. 2B and disabling the de-interleaver.

In some embodiments, statuses of links in a sending direction and a receiving direction may be different. The control information in embodiments may include first sub-control information and second sub-control information. The first sub-control information indicates control information in the sending direction, and the second sub-control information indicates control information in the receiving direction.

In some embodiments, when the control information and the status information are transmitted together in the transmitter device and to the receiver device, there are the following cases:

### Case 1:

The status information in Embodiment 1 and Embodiment 2 includes two bits. One bit indicates LD in the sending direction, and the other bit indicates RD in the sending direction. The control information includes one bit. In Case 1, at least three bits are needed for transmitting the status information and the control information.

In the scenario in FIG. 3A, FIG. 3B, or FIG. 4, when arriving at the first inner FEC sublayer from the first PCS through the first PMA, the first AUI, and the second PMA sublayer, the at least three bits may be in the first status field of the first AM, or in the first pad of the first AM, or a part is in the first status field and the other part is in the first pad, or a first part of the at least three bits is in the first status field, a second part is in the first pad, and a third part is in the second pad. The at least three bits may alternatively be transmitted out of band, for example, sent through an IIC protocol interface, an SPI, a TWI, or an MDIO interface, as shown by dashed lines in FIG. 3A, FIG. 3B, or FIG. 4. In a process in which the three bits are sent from the transmitter device to the receiver device through the transmission medium in FIG. 3A, FIG. 3B, or FIG. 4, the three bits may be directly sent to the receiver device along with the data stream without special processing; or the three bits may be in the second status field of the second AM, or in the third pad of the second AM, or a part is in the second status field and the other part is in the second pad. In some embodiments, alternatively, the status information and the control information may be carried in a fourth pad. In some embodiments, alternatively, a first part of the status information and the control information may be carried in the second AM, and a second part may be carried in a fourth pad. In some embodiments, alternatively, a first part of the status information and the control information may be carried in the second status field, a second part may be carried in the third pad, and a third part may be carried in a fourth pad. In a process in which the control information and the status information are sent from the transmitter device to the receiver device through the transmission medium in FIG. 3A, FIG. 3B, or FIG. 4, the control information and the status information may be directly sent to the receiver device along with the data stream without special processing, or transmitted in the out-of-band manner in Embodiment 1 and Embodiment 2. If the at least three bits of information is carried in the data stream, the at least three bits of information may alternatively be carried in the third pad of the second AM, or a part is carried in the second status field and the other part is carried in the third pad. In some embodiments, alternatively, the at least three bits of information may be carried in the data stream instead of being included in a fourth pad in the second AM. In some embodiments, alternatively, a first part of the at least three bits of information may be carried in the second AM, and a second part may be carried in a fourth pad. In some embodiments, alternatively, a first part of the at least three bits of information may be carried in the second status field, a second part may be carried in the third pad, and a third part may be carried in a fourth pad.

In the scenario in FIG. 5A or FIG. 5B, the first DTE_XS may transmit the status information and the control information to the first PHY_XS in an out-of-band manner, or may send the status information and the control information to the first PCS by using the first AM in the data stream sent by the first DTE_XS to the first PHY_XS. If the status information and the control information are sent to the first PCS by using the first AM in the data stream sent by the first DTE_XS to the first PHY_XS, the at least three bits may be in the first status field of the first AM, or in the first pad of the first AM, or a part is in the first status field and the other part is in the first pad, or a first part of the at least three bits is in the first status field, a second part is in the first pad, and a third part is in the second pad. The at least three bits may alternatively be transmitted out of band, for example, sent through an IIC protocol interface, an SPI, a TWI, or an MDIO interface, as shown by dashed lines in FIG. 5A and FIG. 5B. In a process in which the three bits are sent from the transmitter device to the receiver device through the transmission medium in FIG. 3A or FIG. 4, the three bits may be directly sent to the receiver device along with the data stream without special processing; or the three bits may be in the second status field of the second AM, or in the second pad of the second AM, or a part is in the second status field and the other part is in the second pad. In some embodiments, alternatively, the status information and the control information may be carried in the third pad. In some embodiments, alternatively, a first part of the status information and the control information may be carried in the second AM, and a second part may be carried in the third pad. In some embodiments, alternatively, a first part of the status information and the control information may be carried in the second status field, a second part may be carried in the second pad, and a third part may be carried in the third pad. In a process in which the control information and the status information are sent from the transmitter device to the receiver device through the transmission medium in FIG. 5A or FIG. 5B, the control information and the status information may be directly sent to the receiver device along with the data stream without special processing, or transmitted in the out-of-band manner in Embodiment 1 and Embodiment 2. If the at least three bits of information is carried in the data stream, the at least three bits of information may alternatively be carried in the third pad of the second AM, or a part is carried in the second status field and the other part is carried in the third pad. In some embodiments, alternatively, the at least three bits of information may be carried in the data stream instead of being included in a fourth pad in the second AM. In some embodiments, alternatively, a first part of the at least three bits of information may be carried in the second AM, and a second part may be carried in a fourth pad. In some embodiments, alternatively, a first part of the at least three bits of information may be carried in the second status field, a second part may be carried in the third pad, and a third part may be carried in a fourth pad. A manner in which the second PHY_XS transmits the status information and the control information to the second DTE_XS through the sixth PMA sublayer, the second AUI, and the fifth PMA sublayer is the same as a manner in which the first DTE_XS transmits the status information and the control information to the first PHY_XS through the first PMA sublayer, the first AUI, and the second PMA sublayer.

Case 2: The status information in Embodiment 1 and Embodiment 2 includes two bits. One bit indicates LD in the sending direction, and the other bit indicates LD in the sending direction. The control information includes a plurality of bits, and the plurality of bits indicate the plurality of bypass manners in Table 1. Therefore, at least four bits are needed for transmitting the status information and the control information.

In the scenario in FIG. 3A, FIG. 3B, or FIG. 4, when arriving at the first inner FEC sublayer from the first PCS through the first PMA, the first AUI, and the second PMA sublayer, the at least four bits may be carried in the first pad of the first AM, or a part is carried in the first status field and the other part is carried in the first pad, or a first part of the at least four bits is in the first status field, a second part is in the first pad, and a third part is in the second pad. The at least four bits may alternatively be transmitted out of band, for example, sent through an IIC protocol interface, an SPI, a TWI, or an MDIO interface, as shown by dashed lines in FIG. 3A, FIG. 3B, or FIG. 4. In a process in which the at least four bits are sent from the transmitter device to the receiver device through the transmission medium in FIG. 3A, FIG. 3B, or FIG. 4, the at least four bits may be directly sent to the receiver device along with the data stream without special processing, or transmitted in the out-of-band manner in Embodiment 1 and Embodiment 2. If the at least four bits of information is carried in the data stream, the at least four bits of information may alternatively be carried in the third pad of the second AM, or a part is carried in the second status field and the other part is carried in the third pad. In some embodiments, alternatively, the at least four bits of information may be carried in the data stream instead of being included in a fourth pad in the second AM. In some embodiments, alternatively, a first part of the at least four bits of information may be carried in the second AM, and a second part may be carried in a fourth pad. In some embodiments, alternatively, a first part of the at least four bits of information may be carried in the second status field, a second part may be carried in the third pad, and a third part may be carried in a fourth pad.

In the scenario in FIG. 5A or FIG. 5B, the first DTE_XS may transmit the at least four bits of information to the first PHY_XS in an out-of-band manner, for example, through an IIC protocol interface, an SPI, a TWI, or an MDIO interface, or may send the at least four bits to the first PCS by using the first AM in the data stream sent by the first DTE_XS to the first PHY_XS. The at least four bits may be in the first pad of the first AM, or a part is in the first status field and the other part is in the first pad, or a first part of the at least four bits is in the first status field, a second part is in the first pad, and a third part is in the second pad. The at least four bits may alternatively be transmitted out of band, for example, sent through an IIC protocol interface, an SPI, a TWI, or an MDIO interface, as shown by dashed lines in FIG. 5A or FIG. 5B. In a process in which the four bits are sent from the transmitter device to the receiver device through the transmission medium in FIG. 5A or FIG. 5B, the four bits may be directly sent to the receiver device along with the data stream without special processing; or the at least four bits may be in the third pad of the second AM, or a part is in the second status field of the second AM and the other part is in the third pad. In some embodiments, alternatively, the status information and the control information may be carried in the data stream instead of being included in a fourth pad in the second AM. In some embodiments, alternatively, a first part of the status information and the control information may be carried in the second AM, and a second part may be carried in a fourth pad. In some embodiments, alternatively, a first part of the at least four bits may be carried in the second status field, a second part may be carried in the third pad, and a third part may be carried in a fourth pad. In a process in which the at least four bits are sent from the transmitter device to the receiver device through the transmission medium in FIG. 5A or FIG. 5B, the at least four bits may be directly sent to the receiver device along with the data stream without special processing, or transmitted in the out-of-band manner in Embodiment 1 and Embodiment 2. If the at least four bits of information is carried in the data stream, the at least four bits of information may alternatively be carried in the third pad of the second AM, or a part is carried in the second status field and the other part is carried in the third pad. In some embodiments, alternatively, the at least four bits of information may be carried in the data stream instead of being included in a fourth pad in the second AM. In some embodiments, alternatively, a first part of the at least four bits of information may be carried in the second AM, and a second part may be carried in a fourth pad. In some embodiments, alternatively, a first part of the at least four bits of information may be carried in the second status field, a second part may be carried in the third pad, and a third part may be carried in a fourth pad. A manner in which the second PHY_XS transmits the status information and the control information to the second DTE_XS through the sixth PMA sublayer, the second AUI, and the fifth PMA sublayer is the same as a manner in which the first DTE_XS transmits the status information and the control information to the first PHY_XS through the first PMA sublayer, the first AUI, and the second PMA sublayer.

In some embodiments, "bypassing the second FEC decoder" in the bypass manner may be (1) disabling the second FEC decoder, or (2) not decoding the data stream by the second FEC decoder while not disabling the second FEC decoder, in other words, enabling the configuration 1 of the SDD, the configuration 2 of the SDD, or the HDD of the second FEC decoder. When "bypassing the second FEC decoder" in the bypass manner is (1) disabling the second FEC decoder, transmission power consumption can be effectively reduced.

In some embodiments, "bypassing the de-interleaver" in the bypass manner may be (1) disabling the de-interleaver, or (2) not processing the data stream by the de-interleaver while not disabling the de-interleaver, in other words, enabling the configuration 1 or the configuration 2 of the de-interleaver. When "bypassing the de-interleaver" in the bypass manner is (1) disabling the de-interleaver, transmission power consumption can be effectively reduced.

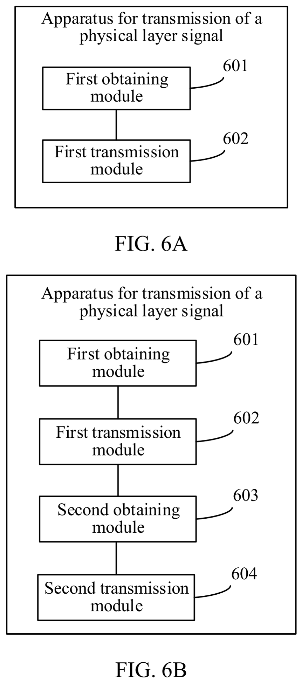

An embodiment of this application further provides an apparatus for transmission of an Ethernet physical layer signal. FIG. 6A is a diagram of a structure of an apparatus for transmission of an Ethernet physical layer signal according to an embodiment of this application. Based on a plurality of modules shown in FIG. 6A, the apparatus for transmission of the Ethernet physical layer signal shown in FIG. 6A can perform all or some of the operations in the method embodiments shown in FIG. 3A, FIG. 3B, and FIG. 5A. It should be understood that the apparatus may include more additional modules than the shown modules, or some of the shown modules may be omitted. This is not limited in this embodiment of this application. As shown in FIG. 6A, the apparatus includes:
a first obtaining module 601, configured to obtain first status information, where the first status information indicates that a received first data stream is degraded; and
a first transmission module 602, configured to send the first status information.

As shown in FIG. 6B, on a basis of FIG. 6A, the apparatus further includes:
a second obtaining module 603, configured to obtain bypass information; and
a second transmission module 604, configured to transmit the bypass information.

In some embodiments, the first obtaining module 601 and the second obtaining module 603 may be a same logical module or physical circuit, and obtain the first status information and control information together or sequentially.

In some embodiments, a method for obtaining the first status information by the first obtaining module 601 is the same as that in Embodiment 1 or 2, a method for obtaining the bypass information by the second obtaining module 603 is the same as that in Embodiment 1 or 2, a method for sending the first status information by the first transmission module 602 is the same as that in Embodiment 1 or 2, and a method for sending the bypass information by the second transmission module 604 is the same as that in Embodiment 1 or 2.

In some embodiments, the second transmission module 604 and the first transmission module 602 may be a same logical module or physical circuit, and send the first status information and the control information together or separately. If the first status information and the bypass information are sent together, a sending manner is the same as that in the foregoing case 1 and case 2.

In some embodiments, the apparatus is located in an Ethernet interface or a chip. In some embodiments, the Ethernet interface including the apparatus is located in a computing device. The computing device may be a network device or a server, and the network device may be a routing device or a switching device.

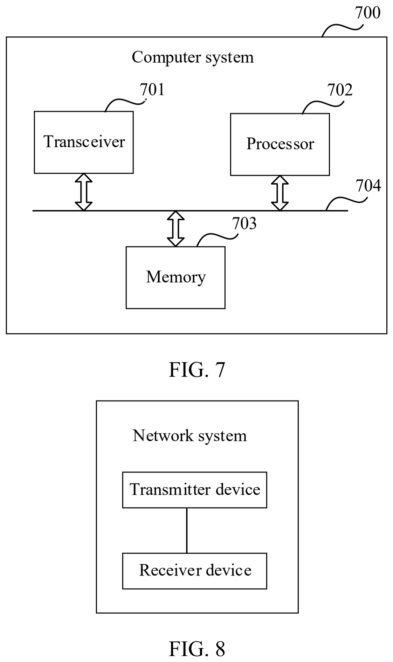

As shown in FIG. 7, an embodiment of this application further provides a computer system 700. The system 700 includes a transceiver 701, a processor 702, and a memory 703. The transceiver 701, the processor 702, and the memory 703 are connected through a bus 704. The transceiver 701 is configured to: receive a packet and send a packet. The memory 703 is configured to store instructions or program code. The processor 702 is configured to invoke the instructions or the program code in the memory 703, to enable the device to perform related processing steps of the first module or the second module in the foregoing method embodiments. In a specific embodiment, the computer system 700 in this embodiment of this application may correspond to the first module or the second module in the foregoing method embodiments. The processor 702 in the computer system 700 reads the instructions or the program code in the memory 703, to enable the computer system 700 shown in FIG. 7 to perform all or some of the operations in the method embodiments shown in FIG. 3A, FIG. 3B, FIG. 5A, and FIG. 5B.

The computer system 700 may also correspond to the apparatus shown in FIG. 6A or FIG. 6B. For example, the first transmission module 702 and the second transmission module 704 in FIG. 6A and FIG. 6B are equivalent to the transceiver 701, and the first obtaining module 601 and the second obtaining module 603 are equivalent to some or all of functions of the processor 702.

In some embodiments, the processor or the chip may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machine (advanced RISC machine, ARM) architecture.

In an optional embodiment, the memory may include a read-only memory and a random access memory, and provides the instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. By way of example but not limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In some embodiments, the computer system 700 may be a network device or a server. For example, the network device may be a routing device or a switching device.

As shown in FIG. 8, an embodiment of this application further provides a network system. The network system includes a transmitter device and a receiver device. The transmitter device is the transmitter device in Embodiment 1 or 2, the apparatus in FIG. 6A or FIG. 6B, or the computer system in FIG. 7. The receiver device is the receiver device in Embodiment 1 or 2.

An embodiment of this application further provides a computer-readable storage medium. The computer-readable storage medium stores at least one program instruction or code, and the program instruction or the code is executed by a computer, to obtain and separately send the status information and the control information in Embodiment 1 or 2, or send the status information and the control information together.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

To clearly describe interchangeability of hardware and software, the steps and compositions of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable apparatus for searching for an alignment marker, so that when the program code is executed by the computer or the another programmable apparatus for searching for the alignment marker, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, the computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It may be clearly understood by a person skilled in the art that, for the purpose of convenient and brief description, for detailed working processes of the foregoing described system, device, and module, refer to corresponding processes in the foregoing method embodiments. Details are not described herein again.

In the several embodiments provided in this application, it should be understood that the disclosed system, device, and method may be implemented in other manners. For example, the foregoing described device embodiments are merely examples. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on actual needs to achieve the objectives of the solutions of embodiments of this application.

In addition, functional modules in embodiments of this application may be integrated into one processing module, each of the modules may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should be further understood that although the following descriptions use terms such as first and second to describe various elements, these elements should not be limited by the terms. These terms are merely used to distinguish one element from another. For example, the first module may be referred to as the second module without departing from the scope of the various examples, and similarly, the second module may be referred to as the first module.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of code blocks mean two or more code blocks. The terms "system" and "network" are often used interchangeably in this specification.

It should be understood that the terms used in the descriptions of the various examples in this specification are merely intended to describe specific examples but are not intended to constitute a limitation. For example, "a ("a" and "an")" and "the" of singular forms used in the descriptions of the various examples and the appended claims are intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or combinations thereof not excluded.

It should be further understood that, depending on the context, the phrase "if determining..." or "if detecting [a stated condition or event]" may be interpreted to mean "when determining...", in response to determining...", "when detecting [the stated condition or event]", or "in response to detecting [the stated condition or event]".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that particular features, structures, or characteristics related to the embodiment or the implementation are included in at least one embodiment of this application. Therefore, "in one embodiment", "in an embodiment", or "a possible implementation" appearing throughout the specification may not necessarily refer to a same embodiment. In addition, these particular features, structures, or characteristics may be combined in one or more embodiments in any appropriate manner.

## Claims

1. A method for transmission of an Ethernet physical layer signal, comprising:
obtaining first status information, wherein the first status information indicates that a received first data stream is degraded; and
sending the first status information.

2. The method according to claim 1, wherein sending the first status information comprises:
sending the first status information out of band.

3. The method according to claim 2, wherein sending the first status information out of band comprises: sending the first status information through an inter-integrated circuit IIC bus protocol interface, a serial peripheral interface SPI, a two-wire interface TWI, or a management data input/output MDIO interface.

4. The method according to claim 1, wherein sending the first status information comprises: sending a second data stream, wherein the second data stream comprises an alignment marker AM, the AM comprises a status field, and the status field comprises a part of the first status information.

5. The method according to claim 1, wherein sending the first status information comprises: sending a second data stream, wherein the second data stream comprises padding data, and a part or all of the first status information is carried in the padding data.

6. The method according to claim 5, wherein the padding data is in an alignment marker AM of the second data stream or in the second data stream.

7. The method according to any one of claims 1 to 6, wherein the first status information comprises forward error correction FEC degrade.

8. The method according to any one of claims 1 to 7, wherein the first status information comprises bypass information.

9. The method according to claim 8, wherein a receiver of the first status information comprises a first FEC decoder and a second FEC decoder, and the bypass information comprises: bypassing the second FEC decoder or weakening an error correction capability of the second FEC decoder.

10. The method according to claim 9, wherein weakening the error correction capability of the second FEC decoder comprises any one of the following:
(1) enabling a configuration 1 of soft decision decoding SDD of the second FEC decoder;
(2) enabling a configuration 2 of SDD of the second FEC decoder; or
(3) enabling hard decision decoding HDD of the second FEC decoder, wherein
an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder.

11. The method according to claim 8, wherein a receiver of the first status information comprises a first FEC decoder, a de-interleaver, and a second FEC decoder, and the bypass information comprises any one of the following:
(1) enabling a configuration 1 of soft decision decoding SDD of the second FEC decoder and enabling a configuration 1 of the de-interleaver;
(2) enabling a configuration 1 of SDD of the second FEC decoder and enabling a configuration 2 of the de-interleaver;
(3) enabling a configuration 1 of SDD of the second FEC decoder and bypassing the de-interleaver;
(4) enabling a configuration 2 of SDD of the second FEC decoder and bypassing the de-interleaver;
(5) enabling hard decision decoding HDD of the second FEC decoder and bypassing the de-interleaver; or
(6) bypassing the second FEC decoder and the de-interleaver, wherein
a de-interleaving delay of the configuration 1 of the de-interleaver is higher than a de-interleaving delay of the configuration 2 of the de-interleaver, an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder.

12. The method according to claim 11, wherein the de-interleaver is a convolutional de-interleaver.

13. The method according to any one of claims 8 to 12, wherein the bypass information is related to a quantity of error units at the first FEC decoder and/or the second FEC decoder.

14. The method according to claim 13, wherein the error unit comprises a codeword, a bit, a symbol, or a bit group comprising any quantity of bits.

15. The method according to claim 14, wherein that the bypass information is related to the quantity of error units at the first FEC decoder and/or the second FEC decoder comprises one or more of (1) to (6):
(1) if a quantity of bit errors in P codewords at the second FEC decoder is less than J, bypassing the interleaver and the second FEC decoder, wherein P and J are positive integers and P>J>1;
(2) if a quantity of bit errors in P codewords at the second FEC decoder is less than K, bypassing the de-interleaver and enabling the hard decision decoding HDD of the second FEC decoder, wherein K is a positive integer and K>J;
(3) if a quantity of bit errors in P codewords at the second FEC decoder is less than L, bypassing the de-interleaver and enabling the configuration 2 of the soft decision decoding SDD of the second FEC decoder, wherein L is a positive integer and L>K;
(4) if a quantity of bit errors in P codewords at the second FEC decoder is less than M, bypassing the de-interleaver and enabling the configuration 1 of the SDD of the second FEC decoder, wherein M>L;
(5) if a quantity of bit errors in P codewords at the second FEC decoder is less than N, enabling a configuration of the FEC decoder as the configuration 1 of the SDD and enabling the configuration 2 of the de-interleaver, wherein N>M; or
(6) if none of (1) to (5) is met, enabling the configuration 1 of the second FEC decoder and enabling the configuration 1 of the de-interleaver.

16. The method according to any one of claims 8 to 15, wherein the bypass information comprises a plurality of bits.

17. The method according to any one of claims 8 to 16, wherein the bypass information comprises first sub-bypass information in a sending direction and/or second sub-bypass information in a receiving direction.

18. The method according to claim 17, wherein the bypass information comprises the plurality of bits, and the plurality of bits indicate the first sub-bypass information and the second sub-bypass information.

19. The method according to any one of claims 8 to 18, wherein the FEC degrade comprises first sub-FEC degrade in the sending direction and/or second sub-FEC degrade in the receiving direction.

20. The method according to claim 19, wherein the FEC degrade comprises a plurality of bits, and a part of the plurality of bits comprised in the FEC degrade indicate the first sub-FEC degrade and the second sub-FEC degrade.

21. The method according to claim 20, wherein a first part of the first status information is carried in the AM, and a second part of the first status information is carried in the padding data of the data stream.

22. A method for transmission of an Ethernet physical layer signal, comprising:
obtaining control information, wherein the control information indicates bypass information; and
sending the control information.

23. The method according to claim 22, wherein sending the control information comprises:
sending the control information out of band.

24. The method according to claim 23, wherein sending the control information out of band comprises: sending the control information through an inter-integrated circuit IIC bus protocol interface, a serial peripheral interface SPI, a two-wire interface TWI, or a management data input/output MDIO interface.

25. The method according to claim 22, wherein sending the control information comprises: sending a data stream, wherein the data stream comprises the control information.

26. The method according to claim 25, wherein the data stream comprises an alignment marker AM and/or first padding data pad, and a part or all of the bypass information is carried in the AM and/or the first pad.

27. The method according to claim 26, wherein the AM comprises a status field, and the status field carries the part or all of the bypass information.

28. The method according to claim 26, wherein the AM comprises a second pad, and the second pad carries the part or all of the bypass information.

29. The method according to claim 25, wherein a receiver of the data stream comprises a first FEC decoder and a second FEC decoder, and the bypass information comprises: bypassing the second FEC decoder or weakening an error correction capability of the second FEC decoder.

30. The method according to claim 29, wherein weakening the error correction capability of the second FEC decoder comprises any one of the following:
(1) enabling a configuration 1 of soft decision decoding SDD of the second FEC decoder;
(2) enabling a configuration 2 of SDD of the second FEC decoder; or
(3) enabling hard decision decoding HDD of the second FEC decoder, wherein
an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder.

31. The method according to claim 25, wherein a receiver of the data stream comprises a first FEC decoder, a de-interleaver, and a second FEC decoder, and the bypass information comprises any one of the following:
(1) enabling a configuration 1 of soft decision decoding SDD of the second FEC decoder and enabling a configuration 1 of the de-interleaver;
(2) enabling a configuration 1 of SDD of the second FEC decoder and enabling a configuration 2 of the de-interleaver;
(3) enabling a configuration 1 of SDD of the second FEC decoder and bypassing the de-interleaver;
(4) enabling a configuration 2 of SDD of the second FEC decoder and bypassing the de-interleaver;
(5) enabling hard decision decoding HDD of the second FEC decoder and bypassing the de-interleaver; or
(6) bypassing the second FEC decoder and the de-interleaver, wherein
a de-interleaving delay of the configuration 1 of the de-interleaver is higher than a de-interleaving delay of the configuration 2 of the de-interleaver, an error correction capability of the configuration 1 of the SDD of the second FEC decoder is stronger than an error correction capability of the configuration 2 of the SDD of the second FEC decoder, and the error correction capability of the configuration 2 is stronger than an error correction capability of the HDD of the second FEC decoder.

32. The method according to claim 31, wherein the de-interleaver is a convolutional de-interleaver.

33. The method according to any one of claims 22 to 32, wherein the bypass information is related to a quantity of error units at the first FEC decoder and/or the second FEC decoder.

34. The method according to claim 33, wherein the error unit comprises a codeword, a bit, a symbol, or a bit group comprising any quantity of bits.

35. The method according to claim 34, wherein that the bypass information is related to the quantity of error units at the first FEC decoder and/or the second FEC decoder comprises one or more of (1) to (6):
(1) if a quantity of bit errors in P codewords at the second FEC decoder is less than J, bypassing the interleaver and the second FEC decoder, wherein P and J are positive integers and P>J>1;
(2) if a quantity of bit errors in P codewords at the second FEC decoder is less than K, bypassing the de-interleaver and enabling the hard decision decoding HDD of the second FEC decoder, wherein K is a positive integer and K>J;
(3) if a quantity of bit errors in P codewords at the second FEC decoder is less than L, bypassing the de-interleaver and enabling the configuration 2 of the soft decision decoding SDD of the second FEC decoder, wherein L is a positive integer and L>K;
(4) if a quantity of bit errors in P codewords at the second FEC decoder is less than M, bypassing the de-interleaver and enabling the configuration 1 of the SDD of the second FEC decoder, wherein M>L;
(5) if a quantity of bit errors in P codewords at the second FEC decoder is less than N, enabling a configuration of the FEC decoder as the configuration 1 of the SDD and enabling the configuration 2 of the de-interleaver, wherein N>M; or
(6) if none of (1) to (5) is met, enabling the configuration 1 of the second FEC decoder and enabling the configuration 1 of the de-interleaver.

36. The method according to any one of claims 22 to 35, wherein the bypass information comprises a plurality of bits.

37. The method according to any one of claims 22 to 36, wherein the bypass information comprises first sub-bypass information in a sending direction and/or second sub-bypass information in a receiving direction.

38. The method according to claim 37, wherein the bypass information comprises two bits, wherein (1) one bit indicates the sent first sub-bypass information, and the other bit indicates the second sub-bypass information; or (2) the two bits indicate the first sub-bypass information or the second sub-bypass information.

39. The method according to claim 37, wherein the bypass information comprises at least three bits, and the at least three bits indicate the first sub-bypass information and the second sub-bypass information.

40. An apparatus for transmission of an Ethernet physical layer signal, comprising a processor, wherein the processor is configured to perform the method according to any one of claims 1 to 39.

41. The apparatus according to claim 40, wherein the apparatus is an Ethernet interface.

42. A computer system, comprising the apparatus according to claim 40 or 41.
A network system, comprising a transmitter device and a receiver device, wherein the transmitter device comprises the apparatus according to claim 40 or 41, and the receiver device is configured to receive status information and/or control information sent by the transmitter device.
